# EUROPÄISCHE PATENTANMELDUNG

(11) **EP 4 613 823 A1**
(43) Veröffentlichungstag der Anmeldung: **10.09.2025**
(21) Anmeldenummer: 24161682.0
(22) Anmeldetag: 06.03.2024
(51) Int. Cl.: C09D 11/101, C09D 11/037, C09D 11/107, B29C 64/10

(54) **3D DRUCKERZEUGNISSE**

(71) Anmelder: LANXESS Deutschland GmbH, 50569 Köln (DE)
(72) Erfinder: BORST, Hans-Ulrich, 50189 Elsdorf (DE); JENTSCH, Jörg-Dietrich, 51381 Leverkusen (DE); KISCHKEWITZ, Marvin, 40217 Düsseldorf (DE); MAY, Lars, 40764 Langenfeld (DE)

(57) **Zusammenfassung**

Die vorliegende Erfindung betrifft Urethanacrylatharz basierte 3D Druckerzeugnisse mit einem Farbabstand ΔE <20 von den L*a*b* Koordinaten zu einer mit "1" beginnenden Farbnummer der RAL-Farbtabelle, enthaltend darin gelöst wenigstens einen gelben Methinfarbstoff, die Verwendung gelber Methinfarbstoffe zur Herstellung von 3D Druckerzeugnissen mit einem Farbabstand ΔE <20 von den L*a*b* Koordinaten zu einer mit "1" beginnenden Farbnummer der RAL-Farbtabelle mittels auf Fotopolymerisation basiertem 3D Druck, sowie ein Verfahren zur Steigerung der Lichtechtheit und der koloristischen Eigenschaften fotopolymerisierbarer, Urethanacrylatharz basierter Zusammensetzungen und daraus herzustellender 3D Druckerzeugnisse mit einem Farbabstand ΔE <20 von den L*a*b* Koordinaten zu einer mit "1" beginnenden Farbnummer der RAL-Farbtabelle mittels darin gelöst wenigstens eines gelben Methinfarbstoffs.

## Beschreibung

Die vorliegende Erfindung betrifft Urethanacrylatharz basierte 3D Druckerzeugnisse mit einem Farbabstand ΔE <20 von den L*a*b* Koordinaten zu einer mit "1" beginnenden Farbnummer der RAL-Farbtabelle, enthaltend darin gelöst wenigstens einen gelben Methinfarbstoff, die Verwendung gelber Methinfarbstoffe zur Herstellung von 3D Druckerzeugnissen mit einem Farbabstand ΔE <20 von den L*a*b* Koordinaten zu einer mit "1" beginnenden Farbnummer der RAL-Farbtabelle mittels auf Fotopolymerisation basiertem 3D Druck, sowie ein Verfahren zur Steigerung der Lichtechtheit und der koloristischen Eigenschaften fotopolymerisierbarer, Urethanacrylatharz basierter Zusammensetzungen und daraus herzustellender 3D Druckerzeugnisse mit einem Farbabstand ΔE <20 von den L*a*b* Koordinaten zu einer mit "1" beginnenden Farbnummer der RAL-Farbtabelle mittels darin gelöst wenigstens eines gelben Methinfarbstoffs.

### Stand der Technik

Farbmasterbatches enthalten Farbmittel in dispergierter oder gelöster Form. Die Farbe oder der Farbton eines Kunststofferzeugnisses dient unter anderem als Erkennungsmerkmal für Unternehmen oder für ein bestimmtes Produkt, als Schutzkomponente, als Sicherheitsmerkmal oder als funktionelles Additiv. Amorphe Kunststoffe wie Polystyrol, Polycarbonat, Polymethylmethacrylat u. a., deren Transparenz erhalten bleiben soll, bedingen den Einsatz von polymerlöslichen Farbstoffen. Im Gegensatz zu einem Pigment ist ein für den 3D Druck mittels Fotopolymerisation vorgesehenes Farbmittel vorzugsweise im zu verarbeitenden Kunststoffharz löslich und liegt nicht kolloidal vor.

Der 3D Druck ist eine Methode der additiven Fertigung. Diese bezeichnet einen Prozess, bei dem auf Basis von digitalen 3D Konstruktionsdaten durch das Ablagern von Material ein Bauteil schichtweise aufgebaut wird. "3D Druck" wird deshalb im Sinne der vorliegenden Erfindung als Synonym für eine additive Fertigung verwendet. Additive Fertigung beschreibt jedoch besser, dass es sich hier um ein Produktionsverfahren handelt, das sich deutlich von konventionellen, abtragenden Fertigungsmethoden unterscheidet. Anstatt zum Beispiel ein Werkstück aus einem festen Block heraus zu fräsen, baut die additive Fertigung Bauteile Schicht für Schicht aus Werkstoffen auf, die beispielsweise als feines Pulver vorliegen. Als Materialien sind unterschiedliche Metalle, Kunststoffe und Verbundwerkstoffe verfügbar.

Der 3D Druck hat als Fertigungsmethode inzwischen in zahlreichen Bereichen und Branchen Einzug gehalten. Beim Bau von Anschauungs- und Funktionsprototypen, Klein- und Mittelserien und auch zunehmend in der Serienfertigung überzeugt dieses Verfahren mit Vorteilen, die mit anderen, konventionellen Methoden nicht erreicht werden können. So lassen sich Produktentwicklung und Markteinführung entscheidend verkürzen, Produktindividualisierungen oder Funktionsintegration gelingen in kürzerer Zeit - und das oftmals zu geringeren Kosten. Die additive Fertigung mittels 3D Druck eröffnet somit großen Originalausrüstungsherstellern (OEMs) aus unterschiedlichsten Industriezweigen die Möglichkeit, sich am Markt zu differenzieren - im Hinblick auf neue Kundennutzen, Kostenreduktionspotenziale und Nachhaltigkeitsziele. Beim 3D Druck werden 3D Druckerzeugnisse gedruckt, indem ein für die entsprechende Drucktechnik geeignetes Material automatisiert Schicht für Schicht selektiv in die gewünschte Form gebracht wird. Ein Originalausrüstungshersteller oder OEM ist ein Hersteller von Komponenten oder Produkten, der diese nicht selber in den Einzelhandel bringt; der Begriff "OEM" (im Gegensatz zu "Erstausrüster") wird in der Automobilindustrie synonym mit einem Fahrzeughersteller verwendet.

Für Kunststoffe gibt es unterschiedliche 3D-Druckverfahren. Darunter gibt es Verfahren, in denen der Kunststoff erst während des Druckens durch Aushärten erzeugt wird. Eine Ausführungsform ist der auf Fotopolymerisation basierende 3D Druck worin eine fotohärtende Harzflüssigkeit schichtweise aufgetragen und mittels Licht einem Fotohärtungsprozess bzw. einer Polymerisation oder einer lichtinduzierten Härtung unterzogen wird. Die selektive schichtweise Aushärtung des flüssigen Harzes erfolgt durch eine räumlich begrenzte, genau definierte, computergesteuerte Belichtung des Harzes mit Licht innerhalb eines für den Initiationsprozess der Fotopolymerisation geeigneten Spektralbereichs. Geeignet sind insbesondere UV-Licht, sichtbares Licht oder Infrarotlicht. Erfindungsgemäße, auf Fotopolymerisation beruhende 3D Druckverfahren sind vorzugsweise die Stereolithographie (SLA) und das Digital Light Processing (DLP). Der Aufbau entsprechender Geräte besteht bei beiden 3D-Druckvarianten aus einer Lichtquelle wobei die Belichtung von oben oder unten möglich ist, sogenannter "top-down" oder "bottom-up" Druck, einem Harz-Reservoir und einer Plattform, auf der die schichtweise Aushärtung des für den 3D Druck einzusetzenden Kunststoffharzes erfolgt. Beim SLA 3D Druck wird mit einem Laserstrahl punktweise durch Abrastern die auszuhärtende Fläche belichtet, beim DLP-Verfahren erfolgt die Belichtung über die gesamte zu belichtende Fläche, insbesondere mit einem LCD panel, wobei LCD für Liquid Crystal Display steht. Während eines typischen Druckvorganges wird die Druckplattform in das Harz im Harzreservoir eingetaucht, während das Belichtungsprogramm abläuft und eine Schicht erzeugt. Die wiederholte Erzeugung der Schichten ergibt schließlich das 3D Druckerzeugnis. Beim SLA Verfahren erzeugt ein Stereolithografiedrucker mittels Laser das 3D Druckerzeugnis. Aufgetragen wird dabei eine Kunststofflösung, die unter UV-Licht aushärtet. Entsprechende 3D Drucker werden als SLA-3D-Drucker bzw. DLP-3D-Drucker bezeichnet. Ein Vergleich der beiden Technologien sowie Anbieter entsprechender 3D Drucker findet sich im Übersichtsartikel: 3Dnatives, Regina P. 8.April 2021 unter https://www.3dnatives.com/de/sla-vs-dlp-3d-druck-080420211/ US 2011/0070976 A1 beschreibt einen Golfball, der aus einem Kern, mindestens einer den Kern umhüllenden Schicht und einer auf der Oberfläche der äußersten Schicht der Hülle aufzubringenden Farbschicht mit fluoreszierendem Pigment besteht. Die äußerste Schicht kann auf einem thermoplastischen Polyurethanmaterial bestehen (Pandex^{®} T8290 oder Pandex^{®} T8283). Für die auf die äußerste Schicht aufzutragende Farbschicht werden in den Beispielen als gelbe, fluoreszierende Chinolinfarbstoffe Disperse Yellow 54 (Sumiplast^{®} Yellow HLR) und Solvent Yellow 98 eingesetzt. Der Ball verfügt über eine hervorragende Spinleistung und Haltbarkeit, ein Erscheinungsbild, das sich durch hervorragende Sichtbarkeit, Stil und Luxus auszeichnet, sowie eine hervorragende Wetterbeständigkeit.

US 2019/0201171 A1 offenbart gefärbte, härtbare Zusammensetzungen zur Verwendung in einem additiven Fertigungsprozess, wobei die Zusammensetzung folgendes umfasst: eine härtbare Harzzusammensetzung, umfassend strahlungshärtbare Komponenten, einen Fotoinitiator und eine Farbstoffzusammensetzung umfassend einen Farbstoff D1 und einen Farbstoff D2, wobei Farbstoff D1 ein Lichtabsorptionsmaximum innerhalb eines Wellenlängenbereichs von 400 bis 530 nm aufweist und Farbstoff D2 ein Lichtabsorptionsmaximum innerhalb eines Wellenlängenbereichs von 540 bis 650 nm zeigt. Als Beispiel werden zwei Anthrachinonfarbstoffe eingesetzt, C.I. Solvent Red 111, CAS No. 82-38-2 (dye 1) und C.I. Solvent Violet 13, CAS No. 81-48-1 (dye 2). Beschrieben wird ferner ein S30 3D-Printer (Rapid Shape GmbH, Heimsheim, Germany) unter Anwendung eines LED-Lichts mit 405 nm Wellenlänge, mit 50 mW/cm² Intensität für 11 sec. pro aufzutragender Schicht.

Neben vorteilhaften Farbeigenschaften während und unmittelbar nach dem Herstellungsprozess eines 3D Druckerzeugnisses mittels Fotopolymerisation sind auch die Eigenschaften in der Verwendung solcher 3D Druckerzeugnisse zu beachten. Die im oben genannten Stand der Technik eingesetzten Farbmittel haben sich als unvorteilhaft erwiesen, weil es zu Farbänderungen durch die infolge der Fotopolymerisation erforderliche Lichteinwirkung im 3D Fertigungsprozess kommt. Die Empfindlichkeit gegenüber Licht, bzw. die Lichtechtheit, ist allerdings ein Qualitätsmerkmal für gefärbte 3D Druckerzeugnisse die mittels eines auf Fotopolymerisation basierenden 3D Drucks hergestellt werden. Möglichst vermieden werden soll ein Verblassen oder Verfärben bis hin zu einer Verbräunung eines 3D Druckerzeugnisses, das durch Fotopolymerisation basierten 3D Druck hergestellt wird.

Zudem sollen für den 3D Druck vorgesehene Farbmittel während der Fotopolymerisation, vorzugsweise nach dem SLA- oder DLP-Verfahren, ihre vorteilhaften anwendungstechnischen Eigenschaften beibehalten und dürfen nicht die Härtung/Polymerisation des 3D Druckerzeugnisses beeinträchtigen oder sogar unterbinden. Vorteilhafte anwendungstechnische Eigenschaften im Sinne der vorliegenden Erfindung sind bei den erfindungsgemäß für den 3D Druck zu definierenden gelben Farbstoffen die Einstellung eines gewünschten bzw. definierten Farbtons und die Einstellung einer reinen, brillanten Farbe.

Aufgabe der vorliegenden Erfindung ist die Bereitstellung gelber Farbstoffe für den 3D Druck mittels Fotopolymerisation, insbesondere nach dem SLA- oder DLP-Verfahren, die es durch ihre Lösbarkeit im zu verarbeitenden Kunststoff erlauben einen definierten gelben Farbton einzustellen, während des Druckverfahrens lichtecht bleiben und zudem ihre koloristischen Eigenschaften beibehalten.

### Methode zur Bewertung der Lichtechtheit

Zur Bestimmung der Lichtechtheit von Farbstoffen für den auf Fotopolymerisation basierenden 3D Druck werden im Rahmen der vorliegenden Erfindung Prüfkörper in Form eines Quaders aus eingefärbtem Harz mit den Abmessungen Länge = 60 mm, Breite = 40 mm und Höhe = 2 mm mit einer Farbstoffkonzentration von 0,02% im Harz hergestellt. Diese Prüfkörper werden anschließend im druckfrischen Zustand nach **DIN EN ISO 4892-2** mit Hilfe des Gerätes Xenotest Beta+ (Atlas Material Testing Technology GmbH, Linsengericht-Altenhaßlau, Deutschland) 95 - 100 h lang belichtet (Xenon Lampe). Die Bewertung der Lichtechtheit erfolgt farbmetrisch, indem mit einem Kugelspektralfotometer X-Rite Ci7800 (X-Rite GmbH, Planegg-Martinsried, Deutschland) Transmissionsspektren der belichteten Prüfkörper aufgenommen werden, wobei folgende Einstellungen gewählt werden: Messgeometrie = d/8°; Spektralintervall = 10 nm; Spektralbereich = 360 - 750 nm. Aus den dabei erhaltenen Transmissionsspektren werden mit folgenden Einstellungen anschließend die farbmetrischen Daten mit der Herstellersoftware des Kugelspektralfotometers berechnet: Lichtquelle/Beobachter = D65 / 10°; Farbraum = L*a*b*C*h°. Als Bewertungsgrundlage der Lichtechtheit werden die Farbabstände, angegeben als ΔE im L*a*b*C*h° Farbraum, zwischen belichteten Prüfkörpern und den entsprechenden nicht belichteten Prüfkörpern herangezogen. Je größer der Farbabstand ist, desto größer ist die Änderung des Farbeindruckes infolge des Einflusses der Belichtung und damit ist die Lichtechtheit umso schlechter. Zur Einordnung des ΔE wird ein Vergleich mit anderen Farbstoffen mit ähnlichem Farbton, sogenannte nicht erfindungsgemäße Beispiele, deren Lichtechtheit in anderen Anwendungen, insbesondere in der Kunststoff Massefärbung, laut Herstellerangaben allgemein als gut bewertet wird, herangezogen.

### Methode zur Bewertung der Stabilität der koloristischen Eigenschaften

Um die Änderung der spektralen Eigenschaften, die die koloristischen Eigenschaften eines Farbstoffes bestimmen, zu ermitteln, werden im Rahmen der vorliegenden Erfindung die Absorptionsspektren vor und nach der lichtinduzierten Aushärtung der zu untersuchenden, eingefärbten Harze verglichen.

Die, wie im obigen Abschnitt "Methode zur Bewertung der Lichtechtheit" beschrieben, hergestellten eingefärbten Harze werden dazu in eine Quarzglasküvette mit einer Breite von 1 cm gefüllt und die Absorptionsspektren in Transmission mit dem Gerät x-Rite Ci7800 (X-Rite GmbH, Planegg-Martinsried, Deutschland) im Wellenlängenbereich von 360 bis 750 nm aufgenommen. Diese Absorptionsspektren werden danach um die Absorption des entsprechenden, nicht eingefärbten Harzes korrigiert, indem dieselbe Messung mit dem nicht eingefärbten Harz durchgeführt wird. Analog dazu werden die Absorptionsspektren in Transmission von den eingefärbten Prüfkörpern aufgenommen und korrigiert und die Spektren jeweils auf die Schichtdicke der Küvette bzw. des zu untersuchenden Prüfkörpers normiert.

Schließlich wird die Ähnlichkeit der Absorptionsspektren vor und nach dem 3D Druck aus den Messdaten berechnet, indem man den Korrelationskoeffizient R der normierten Absorption (Spektralintervall 10 nm) berechnet. Je größer R ist, desto größer ist die Ähnlichkeit der Absorptionsspektren und desto stabiler sind die koloristischen Eigenschaften eines für Fotopolymerisation basierten 3D Druck vorgesehenen bzw. im Sinne der vorliegenden Erfindung geeigneten Farbstoffs.

### Erfindung

Lösung der Aufgabe und Gegenstand der vorliegenden Erfindung sind **3D Druckerzeugnisse** mit einem Farbabstand ΔE <20 von den L*a*b* Koordinaten einer mit "1" beginnenden Farbnummer der RAL-Farbtabelle, basierend auf fotopolymerisierbaren Zusammensetzungen enthaltend wenigstens ein Urethanacrylatharz und wenigstens einen gelben Methinfarbstoff mit einem Molekulargewicht im Bereich von 50 bis 1000 g/mol und mit einer nach **DIN EN ISO 7579:2010 DE** zu bestimmenden Löslichkeit in der Urethanacrylatharz basierten Zusammensetzung ≥ 0,05 g/L bei 23°C.

Gegenstand der vorliegenden Erfindung ist auch die **Verwendung** wenigstens eines gelben Methinfarbstoffs mit einem Molekulargewicht im Bereich von 50 bis 1000 g/mol zur Steigerung der nach **DIN EN ISO 4892-2** zu bestimmenden Lichtechtheit und koloristischen Eigenschaften fotopolymerisierbarer, Urethanacrylatharz basierter Zusammensetzungen und daraus herzustellender 3D Druckerzeugnisse mit einem Farbabstand ΔE <20 von den L*a*b* Koordinaten zu einer mit "1" beginnenden Farbnummer der RAL-Farbtabelle und einer nach **DIN EN ISO 7579:2010 DE** zu bestimmenden Löslichkeit des Farbstoffs in der Urethanacrylatharz basierten Zusammensetzung ≥ 0,05 g/L bei 23°C. Die Steigerung der Lichtechtheit und der koloristischen Eigenschaften wird in der erfindungsgemäßen Verwendung durch Aufnahme von Transmissionsspektren vor und nach der lichtinduzierten Aushärtung von Prüfkörpern entsprechend eingefärbter Urethanacrylatharze mit einem Kugelspektralfotometer gemessen, danach um die Absorption des entsprechenden, nicht eingefärbten Harzes korrigiert und auf die Schichtdicke der Küvette bzw. des zu untersuchenden Prüfkörpers normiert sowie schließlich die Ähnlichkeit der Absorptionsspektren vor und nach dem 3D Druck aus den Messdaten ermittelt, indem man den Korrelationskoeffizient R der normierten Absorption berechnet.

Die Erfindung betrifft ferner ein **Verfahren** zur Steigerung der nach **DIN EN ISO 4892-2** zu bestimmenden Lichtechtheit und koloristischen Eigenschaften fotopolymerisierbarer, Urethanacrylatharz basierter Zusammensetzungen und daraus herzustellender 3D Druckerzeugnisse mit einem Farbabstand ΔE <20 von den L*a*b* Koordinaten zu einer mit "1" beginnenden Farbnummer der RAL-Farbtabelle, indem wenigstens ein gelber Methinfarbstoff mit einem Molekulargewicht im Bereich von 50 bis 1000 g/mol und einer nach **DIN EN ISO 7579:2010 DE** zu bestimmenden Löslichkeit in der Urethanacrylatharz basierten Zusammensetzung ≥ 0,05 g/L bei 23°C eingesetzt wird. Wie bei der erfindungsgemäßen Verwendung so wird die Steigerung der Lichtechtheit und der koloristischen Eigenschaften im erfindungsgemäßen Verfahren durch Aufnahme von Transmissionsspektren vor und nach der lichtinduzierten Aushärtung von Prüfkörpern entsprechend eingefärbter Urethanacrylatharze mit einem Kugelspektralfotometer gemessen, danach um die Absorption des entsprechenden, nicht eingefärbten Harzes korrigiert und auf die Schichtdicke der Küvette bzw. des zu untersuchenden Prüfkörpers normiert sowie schließlich die Ähnlichkeit der Absorptionsspektren vor und nach dem 3D Druck aus den Messdaten ermittelt, indem man den Korrelationskoeffizient R der normierten Absorption berechnet.

Die Erfindung betrifft schließlich auch ein **Verfahren** zur additiven Fertigung von 3D Druckerzeugnissen mit einem Farbabstand ΔE <20 von den L*a*b* Koordinaten zu einer mit "1" beginnenden Farbnummer der RAL-Farbtabelle indem Urethanacrylatharz basierte Zusammensetzungen enthaltend wenigstens einen gelben Methinfarbstoff mit einem Molekulargewicht im Bereich von 50 bis 1000 g/mol und einer nach **DIN EN ISO 7579:2010 DE** zu bestimmenden Löslichkeit in der Urethanacrylatharz basierten Zusammensetzung ≥ 0,05 g/L bei 23°C in einem auf Fotopolymerisation basierten SLA-3D-Drucker oder DLP-3D-Drucker eingesetzt werden.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind. Dies betrifft ebenso die Kombination der Mengenangaben zu den einzelnen Komponenten in Bezug auf die beanspruchten Verfahren und Verwendungen. Die im Rahmen dieser Anmeldung genannten Normen beziehen sich auf die zum Anmeldetag dieser Erfindung geltenden Fassung. Bei Prozentangaben handelt es sich, sofern nicht anders angegeben, um Gewichtsprozente.

### Tab.1 RAL-Farbtabelle für Gelb

Im Rahmen der vorliegenden Erfindung gilt als Gelb eine Farbe, die im RAL Farbsystem nach **https://de.wikipedia.org/wiki/RAL-Farbe#Gelb** in der RAL Farbtabelle eine Farbnummer hat, die mit einer "1" beginnt. Im Einzelnen unterscheidet man zum Anmeldetag der vorliegenden Erfindung Gelbtöne wie folgt:

| | | L* | a* | b* |
|---|---|---|---|---|
| RAL 1000 | Grünbeige | 80 | 1 | 24 |
| RAL 1001 | Beige | 78 | 6 | 23 |
| RAL 1002 | Sandgelb | 77 | 7 | 33 |
| RAL 1003 | Signalgelb | 79 | 17 | 79 |
| RAL 1004 | Goldgelb | 71,42 | 15,28 | 69,28 |
| RAL 1005 | Honiggelb | 69 | 13 | 70 |
| RAL 1006 | Maisgelb | 72 | 20 | 74 |
| RAL 1007 | Narzissengelb | 72 | 24 | 74 |
| RAL 1011 | Braunbeige | 59,92 | 11,35 | 29,17 |
| RAL 1012 | Zitronengelb | 75,04 | 4,64 | 61,31 |
| RAL 1013 | Perlweiß | 90 | 1 | 9 |
| RAL 1014 | Elfenbein | 84 | 4 | 21 |
| RAL 1015 | Hellelfenbein | 88 | 3 | 14 |
| RAL 1016 | Schwefelgelb | 88,37 | -9,78 | 71,30 |
| RAL 1017 | Safrangelb | 76,32 | 19,37 | 51,02 |
| RAL 1018 | Zinkgelb | 83,35 | 3,46 | 75,83 |
| RAL 1019 | Graubeige | 62,62 | 4,31 | 12,94 |
| RAL 1020 | Olivgelb | 61,98 | 0,39 | 32,18 |
| RAL 1021 | Rapsgelb | 82 | 10 | 80 |
| RAL 1023 | Verkehrsgelb | 82 | 11 | 80 |
| RAL 1024 | Ockergelb | 64,26 | 8,49 | 41,49 |
| RAL 1026 | Leuchtgelb | 97 | -15 | 90 |
| RAL 1027 | Currygelb | 58,15 | 5,83 | 47,68 |
| RAL 1028 | Melonengelb | 77 | 25 | 78 |
| RAL 1032 | Ginstergelb | 76 | 11 | 76 |
| RAL 1033 | Dahliengelb | 71,74 | 27,78 | 71,68 |
| RAL 1034 | Pastellgelb | 72,73 | 21,40 | 45,09 |
| RAL 1035 | Perlbeige | 54,79 | 0,35 | 11,86 |
| RAL 1036 | Perlgold | 48,95 | 4,77 | 26,69 |
| RAL 1037 | Sonnengelb | 70,28 | 26,19 | 64,79 |

Dargestellt sind die für Gelb geräteunabhängigen CIE L*a*b* Farbwerte für den jeweiligen RAL Wert: L* steht für die Luminanz, a* beschreibt den Farbort bezüglich der Rot-Grün-Achse und b* beschriebt den Farbort bezüglich der Gelb-Blau-Achse unter Verwendung von D65 Normlicht mit einem 10° Sichtfeld eines Normalbeobachters. Das Farbmodell ist in der **EN ISO 11664-4 "**Colorimetry - Part 4: CIE 1976 L*a*b* Colour space" genormt. Zu L*a*b*-Farbraum (auch: CIELAB) siehe: **https://de.wikipedia.org/wiki/Lab-Farbraum.** Jede Farbe im Farbraum ist durch einen Farbort mit den kartesischen Koordinaten {L*, a*, b*} definiert. Die a*b*-Koordinatenebene wurde in Anwendung der Gegenfarbentheorie konstruiert. Auf der a*-Achse liegen sich Grün und Rot gegenüber, die b*-Achse verläuft zwischen Blau und Gelb. Komplementäre Farbtöne stehen sich jeweils um 180° gegenüber, in ihrer Mitte (dem Koordinatenursprung a*=0, b*=0) liegen alle unbunten Farben.

Die L*-Achse beschreibt die Helligkeit (Luminanz) der Farbe mit Werten von 0 bis 100. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. Die a*-Achse beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen.

Die a*-Werte reichen von ca. -170 bis +100, die b*-Werte von -100 bis +150, wobei die Maximalwerte nur bei mittlerer Helligkeit bestimmter Farbtöne erreicht werden. Der CIELAB-Farbkörper hat im mittleren Helligkeitsbereich seine größte Ausdehnung, die aber je nach Farbbereich unterschiedlich in Höhe und Größe ist.

Erfindungsgemäß umfasst sind zu Gelb ähnliche Farbtöne die einen Farbabstand ΔE <20 von den L*a*b* Koordinaten zu einer mit "1" beginnenden Farbnummer der RAL-Farbtabelle aufweisen.

### Erfindungsgemäß bevorzugte gelbe Methinfarbstoffe

Methinfarbstoffe, auch als Polymethinfarbstoffe bezeichnet, sind gemäß **https://de.wikipedia.org/wiki/Methinfarbstoffe#:--:text=Die%20Methinfarbstoffe%20e nthalten%20eine%20ungerade,kationisch%2C%20anionisch%20oder%20neutral%2 0sein** Farbstoffe, deren chromophores System aus konjungierten Doppelbindungen besteht (Polyene), die von zwei Endgruppen - einem Elektronenakzeptor A und einem Elektronendonor D - gemäß Formel (I) flankiert sind:

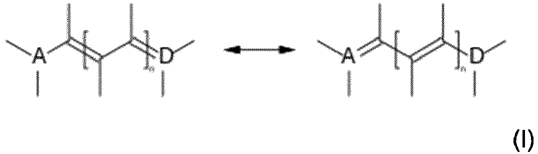

Methinfarbstoffe enthalten eine ungerade Anzahl Methingruppen. Die Endgruppen können Teil eines Heterocyclus und die Doppelbindungen Teil eines aromatischen Systems sein. Daraus ergeben sich für Methinfarbstoffe verschiedene Unterklassen. Methinfarbstoffe lassen sich als Polyenfarbstoffe mit terminalen Elektronendonor- und Akzeptorgruppen charakterisieren. In den überwiegenden Fällen enthalten die Endgruppen der Methinfarbstoffe Stickstoff- oder Sauerstoffatome. Während jedoch die in aller Regel als Naturfarbstoffe vorkommenden Polyenfarbstoffe, wie die Carotinoide, auf gelbe bis gelb-rote Farbtöne beschränkt sind, kann man mit den überwiegend synthetischen Methinfarbstoffen nahezu alle Farben des Spektrums erzielen. Bevorzugte gelbe Methinfarbstoffe für die Kunststoffeinfärbung und deshalb erfindungsgemäß für den auf Fotopolymerisation basierenden 3D Druck bevorzugt sind **Merocyaninfarbstoffe,** die als Endgruppen des Polyenstrukturelements eine Amino- und eine Carbonylgruppe aufweisen. Für diesen Farbstofftyp lässt sich gemäß Formel (II) sowohl eine neutrale, als auch eine zwitterionische mesomere Grenzstruktur formulieren.

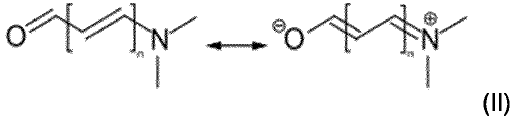

Ein bekannter Vertreter der Merocyaninfarbstoffe ist 2,4-dihydro-5-methyl-2-phenyl-3H-pyrazol-3-on gemäß Formel (III) 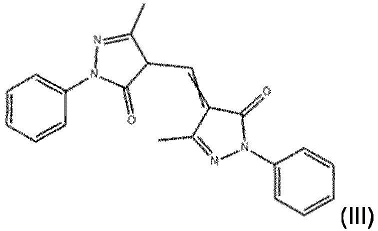 auch bekannt als Macrolex^{®} Gelb 3G mit CAS No. 4702-90-3, oder Solvent Yellow 93.

Ebenso für die Kunststoffeinfärbung relevante und erfindungsgemäß für den 3D Druck bevorzugt einzusetzende Methinfarbstoffe sind die **Styrylfarbstoffe,** die man durch Kondensation einer aktiven Methylenverbindung, beispielsweise Malonsäuredinitril, mit einem Benzaldehyd-Derivat erhält. Durch Integration eines Benzolrings in den Polyenteil besitzen diese Verbindungen eine Styrol-Teilstruktur. Bekannte Vertreter der Styrylfarbstoffe sind [[4-[[2-(4-cyclohexylphenoxy)ethyl]ethylamino]-2-methylphenyl] methylene]malononitrile, auch bekannt als Macrolex^{®} Gelb 6G oder als C.I.Solvent Yellow 179, CAS No. 54079-53-5, gemäß Formel (IVa) 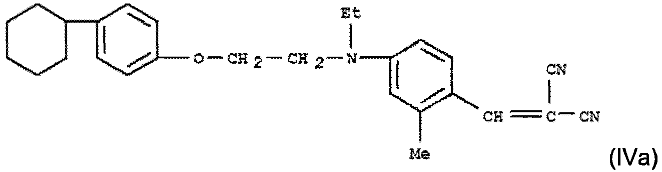 oder C.I. Disperse Yellow 31, CAS No. 4361-84-6, gemäß Formel (IVb), das man durch Kondensation von Cyanessigsäureethylester mit einem p-Aminobenzaldehyd-Derivat erhält.

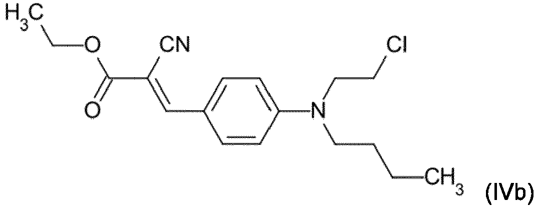

### Bevorzugte Ausführungsformen der Erfindung

Vorzugsweise weisen die erfindungsgemäß einzusetzenden Urethanacrylatharz basierten Zusammensetzungen und daraus herzustellende 3D Druckerzeugnisse einen Farbabstand ΔE <10 von den L*a*b* Koordinaten zu einer mit "1" beginnenden Farbnummer der RAL-Farbtabelle auf.

Besonders bevorzugt weisen die erfindungsgemäß einzusetzenden Urethanacrylatharz basierten Zusammensetzungen und daraus herzustellende 3D Druckerzeugnisse einen Farbabstand ΔE <5 von den L*a*b* Koordinaten zu einer mit "1" beginnenden Farbnummer der RAL-Farbtabelle auf.

Vorzugsweise betrifft die Erfindung 3D Druckerzeugnisse mit einem Farbabstand ΔE <20 von den L*a*b* Koordinaten einer mit "1" beginnenden Farbnummer der RAL-Farbtabelle basierend auf Zusammensetzungen für die **additive Fertigung von 3D Druckerzeugnissen mittels auf Fotopolymerisation basiertem 3D Druck,** enthaltend wenigstens ein Urethanacrylat Basisharz und wenigstens einen gelben Methinfarbstoff mit einem Molekulargewicht im Bereich von 50 bis 1000 g/mol und einer nach **DIN EN ISO 7579:2010 DE** zu bestimmenden Löslichkeit des Farbstoffs in der Urethanacrylatharz basierten Zusammensetzung ≥ 0,05 g/L bei 23°C.

Vorzugsweise betrifft die Erfindung ein Verfahren zur Steigerung der nach **DIN EN ISO 4892-2** zu bestimmenden Lichtechtheit und koloristischen Eigenschaften fotopolymerisierbarer, Urethanacrylatharz basierter Zusammensetzungen und daraus herzustellender 3D Druckerzeugnisse mit einem Farbabstand ΔE <20 von den L*a*b* Koordinaten einer mit "1" beginnenden Farbnummer der RAL-Farbtabelle **mittels additiver Fertigung im 3D Druck,** indem wenigstens ein gelber Methinfarbstoff mit einem Molekulargewicht im Bereich von 50 bis 1000 g/mol und einer nach **DIN EN ISO 7579:2010 DE** zu bestimmenden Löslichkeit in der Urethanacrylatharz-basierten Zusammensetzung ≥ 0,05 g/L bei 23°C eingesetzt wird.

Vorzugsweise betrifft die Erfindung die Verwendung wenigstens eines gelben Methinfarbstoffs mit einem Molekulargewicht im Bereich von 50 bis 1000 g/mol zur Steigerung der nach **DIN EN ISO 4892-2** zu bestimmenden Lichtechtheit und koloristischen Eigenschaften fotopolymerisierbarer, Urethanacrylatharz basierter Zusammensetzungen und daraus herzustellender 3D Druckerzeugnisse mit einem Farbabstand ΔE <20 von den L*a*b* Koordinaten einer mit "1" beginnenden Farbnummer der RAL-Farbtabelle **mittels additiver Fertigung im 3D Druck** und mit einer nach **DIN EN ISO 7579:2010 DE** zu bestimmenden Löslichkeit des Farbstoffs in der Urethanacrylatharz basierten Zusammensetzung ≥ 0,05 g/L bei 23°C.

Für die erfindungsgemäße Verwendung bevorzugte Methinfarbstoffe sind gelbe Merocyaninfarbstoffe, die als Endgruppen des Polyenstrukturelements eine Amino- und eine Carbonylgruppe aufweisen, oder gelbe Styrylfarbstoffe, die man durch Kondensation einer aktiven Methylenverbindung, mit einem Benzaldehyd-Derivat erhält und durch Integration eines Benzolrings in den Polyenteil eine Styrol-Teilstruktur besitzen.

Vorzugsweise betrifft die Erfindung 3D Druckerzeugnisse, eine erfindungsgemäße Verwendung, sowie ein erfindungsgemäßes Verfahren zur Steigerung der Lichtechtheit und der koloristischen Eigenschaften von 3D Druckerzeugnissen worin auf 20 bis 99,995 Massenanteile Urethanacrylat basiertem Harz, das vorzugsweise Additive enthält, 0,005 bis 5 Massenanteile Methinfarbstoff eingesetzt werden.

Besonders bevorzugt werden zusätzlich zum wenigstens einen Methinfarbstoff noch 0,5 - 10 Massenanteile Fotoinitiator, der vorzugsweise in Wellenlängenbereich von 300 bis 450 nm absorbiert, im Urethanacrylatharz eingesetzt.

Ganz besonders bevorzugt werden zusätzlich zum wenigstens einen Methinfarbstoff und zu den 0,5 - 10 Massenanteilen Fotoinitiator 0,001 - 1 Massenanteile wenigstens eines Additivs im Urethanacrylatharz eingesetzt, wobei bevorzugte Additive im Sinne der vorliegenden Erfindung wenigstens ein Egalisiermittel, wenigstens ein Stabilisator, wenigstens ein zusätzlicher Farbstoff verschieden vom Methinfarbstoff, wenigstens ein Füllstoff oder wenigstens ein organisches Pigment ist.

### Urethanacrylat basierte Harze

Erfindungsgemäß bevorzugte fotopolymerisierbare Urethanacrylat basierte Harze, insbesondere für die additive Fertigung im 3D Druck, basieren auf Polyurethanacrylat [CAS No. 82116-59-4], Polyetherurethanacrylat oder Urethanacrylatharzen. Verwiesen sei auf WO 2005/028532 A1**,** RU 2546966 C1 **oder** M. Alishiri et al., Materials Science and Engineering: C, Vol. 42, September 2014, S. 763-773**.**

Im Rahmen der vorliegenden Erfindung wurden eingesetzt und sind daher besonders bevorzugt:
"3D Printing UV Sensitive Resin Clear" der Shenzhen Anycubic Technology Co., Ltd, China; ein farbloses Harz für den lichtinduzierten 3D Druck mit hoher Druckgeschwindigkeit enthaltend 30 - 60 % Polyurethanacrylate CAS No. 82116-59-4; 10 - 40 % Isooctylacrylat CAS No. 29590-42-9; 2 - 5 % Fotoinitiator;
"Addigy^{®} LPU Rigid 341-02 IM" der Covestro Deutschland AG, Leverkusen, Deutschland; ein farbloses aliphatisches Polyetherurethanacrylatharz für den lichtinduzierten 3D Druck, optimiert für hohe mechanische Beanspruchung und Festigkeit (< 25 % Isobornylmethacrylat CAS 7534-94-3; ca. 10 % 4-(1-Oxo-2-propenyl)morpholin CAS No. 5117-12-4; < 0,15 % Methacrylsäure CAS No. 79-41-4 / 2-Hydroxyethylmethacrylat CAS No. 868-77-9);
"Ultracur3D^{®} FL 300" der BASF 3D Printing Solutions GmbH, Ludwigshafen, Deutschland; ein farbloses reaktives Urethanacrylatharz für den lichtinduzierten 3D Druck, optimiert für hohe Torsionsflexibilität und hohe Reißfestigkeit (1 - 3 % Diphenyl(2,4,6-trimethylbenzoyl)phosphinoxid CAS No. 75980-60-8; 15 - 20 % Isodecylacrylat CAS No. 1330-61-6; 5 - 10 % exo-1,7,7-Trimethylbicyclo[2.2.1]hept-2-ylacrylat CAS No. 5888-33-5; 25 - 50 % 2-Oxazolidinone, 3-ethenyl-5-methyl- CAS No. 3395-98-0).

Erfindungsgemäß einzusetzende fotopolymerisierbare Harze enthalten vorzugsweise neben dem wenigstens einen Farbstoff in der Regel ein Gemisch aus wenigstens einem polymerisierbaren Monomer, vorzugsweise ein Acrylat, und/oder Präpolymerisat, vorzugsweise ein (Poly-)urethanacrylat, wenigstens einen Fotoinitiator und wenigstens ein Additiv. Im Hinblick auf solche Zusatzstoffe sei prinzipiell auf WO 2018/038954 A1 verwiesen, deren Inhalt von der vorliegenden Beschreibung vollumfänglich umfasst ist. Nachstehend werden bevorzugt einzusetzende Fotoinitiatoren und Additive aufgeführt.

### Fotoinitiator

Ein erfindungsgemäß einzusetzender Fotoinitiator ist in der Regel durch eines oder mehrere der folgenden Merkmale gekennzeichnet,
- mit Lichtabsorptionsband(en) in einem Wellenlängenbereich von 300 bis 450 nm und/oder einer Löslichkeit in der härtbaren Zusammensetzung von mindestens 2 g/l bei 23 °C;
- einer Löslichkeit in den strahlenhärtbaren Komponenten der härtbaren Harzzusammensetzung und/oder in den gegebenenfalls anwesenden Additiv(en);
- einer Fähigkeit eine Polymerisationsreaktion-einleitende Spezies zu bilden, wenn er Lichtenergie mit einer Wellenlänge zwischen 300 und 450 nm ausgesetzt wird, z.B. durch freie Radikale.

Erfindungsgemäß insbesondere bevorzugt wird wenigstens ein Fotoinitiator aus der Reihe 2-Hydroxy-2-methyl-1-phenylaceton, 1-Hydroxycyclohexylphenylketon, 2,4,6-Trimethylbenzoyl-Diphenylphosphinoxide, Phenylbis(2,4,6-Trimethylbenzoyl)phosphin-oxide, Ethyl-2,4,6-trimethylbenzoylphenylphosphonat eingesetzt.

### Additive

Eine erfindungsgemäß für den 3D Druck einzusetzende fotopolymerisierbare Harzzusammensetzung kann vorzugsweise wenigstens ein Additiv, Stabilisator(en) oder Mischungen davon, enthalten.

Insbesondere kann die Zugabe von Stabilisator(en) zur härtbaren Zusammensetzung dazu beitragen, die Auflösung und Genauigkeit des SLA-Prozesses zu verbessern, indem unerwünschte Streueffekte abgeschwächt oder vermieden werden, sowie die Haltbarkeit der härtbaren Zusammensetzung zu verlängern. Solche Stabilisatoren enthalten häufig eine Phenoleinheit. Bevorzugt sind p-Methoxyphenol (MOP), Hydrochinonmonomethylether (MEHQ), 2,6-Di-tert-butyl-4-methyl-phenol (BHT; lonol), Phenothiazin, 2,2,6,6-Tetramethyl-piperidin-1-oxylrest (TEMPO) und deren Mischungen. Solche Stabilisator(en) werden vorzugsweise in folgenden Mengen eingesetzt:
- Untere Menge: mindestens 0,001 oder mindestens 0,005 oder mindestens 0,01 Gew.-%;
- Obermenge: höchstens 0,02 oder höchstens 0,05 oder höchstens 0,5 höchstens 1 Gew.-%;
- Bereich: von 0,001 bis 1 oder von 0,005 bis 0,05 Gew.-%;
wobei die Gew.-% sich auf das Gewicht der härtbaren Zusammensetzung beziehen.

### Methinfarbstoffe

Erfindungsgemäß einzusetzende gelbe Methinfarbstoffe zeichnen sich durch die folgenden Merkmale aus:
- Molekulargewicht im Bereich von 50 bis 1.000 g/mol
- Löslichkeit in der härtbaren Zusammensetzung mindestens 0,05 g/L bei 23°C
- Lichtabsorptionsmaximum in einem Wellenlängenbereich von 400 bis 490 nm
- sehr gute Lichtechtheit im 3D Objekt
- hohe Stabilität der koloristischen Eigenschaften gegenüber dem Härtungsprozess
- beinhalten wenigstens eine Methineinheit.

Erfindungsgemäß bevorzugt einzusetzende gelbe **Methinfarbstoffe** weisen wenigstens eine Struktur der Formeln (V), (VI) oder (VII) auf 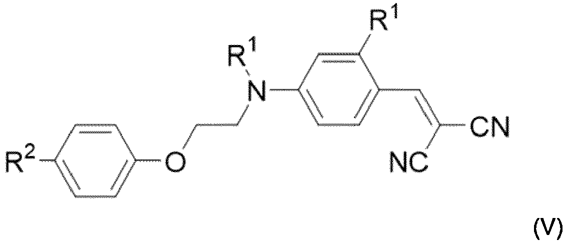
worin R¹ für C₁-C₄-Alkyl, vorzugsweise für Methyl, Ethyl, n-Propyl, iso-Propyl, n-Butyl, iso-Butyl oder tert.-Butyl und R² für C₁-C₄-Alkyl, vorzugsweise für Cyclohexyl, Methyl, Ethyl, n-Propyl, iso-Propyl, n-Butyl, iso-Butyl oder tert.-Butyl steht, 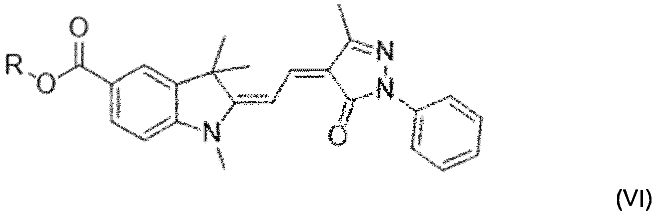
worin R für C₁-C₄-Alkyl, vorzugsweise für Methyl, Ethyl, n-Propyl, iso-Propyl, n-Butyl, iso-Butyl oder tert.-Butyl steht,
   oder 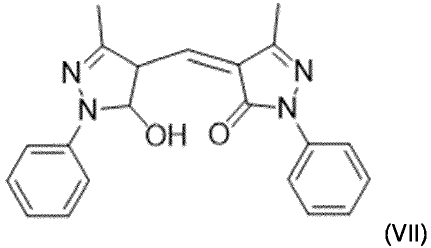
Erfindungsgemäß ist ein besonders bevorzugt einzusetzender gelber **Methinfarbstoff** auszuwählen aus
4-[(1,5-Dihydro-3-methyl-5-oxo-1-phenyl-4H-pyrazol-4-yliden)methyl]-2,4-dihydro-5-methyl-2-phenyl-3H-pyrazol-3-on; C.I. Solvent Yellow 93, CAS No. 4702-90-3
[[4-[[2-(4-Cyclohexylphenoxy)ethyl]ethylamino]-2-methylphenyl]methylen]-propanedinitril; C.I. Solvent Yellow 179, CAS No. 54049-53-7.

Das Verfahren zur Steigerung der nach **DIN EN ISO 4892-2** zu bestimmenden Lichtechtheit und koloristischen Eigenschaften fotopolymerisierbarer, Urethanacrylatharz basierter Zusammensetzungen wird vorzugsweise in der additiven Fertigung von 3D Druckerzeugnissen, besonders bevorzugt in der additiven Fertigung mittels Fotopolymerisation, insbesondere bevorzugt in der additiven Fertigung von 3D Druckerzeugnissen mittels eines auf Fotopolymerisation basierten SLA-3D-Druckers oder DLP-3D-Druckers, angewandt.

Deshalb betrifft die vorliegende Erfindung zudem auch ein Verfahren zur additiven Fertigung von 3D Druckerzeugnissen mit einem Farbabstand ΔE <20 von den L*a*b* Koordinaten zu einer mit "1" beginnenden Farbnummer der RAL-Farbtabelle, indem Urethanacrylatharz basierte Zusammensetzungen enthaltend wenigstens einen gelben Methinfarbstoff mit einem Molekulargewicht im Bereich von 50 bis 1000 g/mol und einer nach **DIN EN ISO 7579:2010 DE** zu bestimmenden Löslichkeit in der Urethanacrylatharz basierten Zusammensetzung ≥ 0,05 g/L bei 23°C in einem auf Fotopolymerisation basierten SLA-3D-Drucker oder DLP-3D-Drucker eingesetzt werden und der gelbe **Methinfarbstoff** wenigstens eine Struktureinheit der Formeln 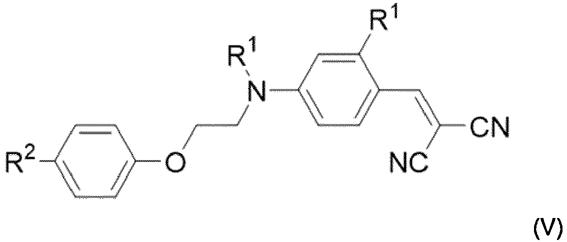
worin R¹ für C₁-C₄-Alkyl, vorzugsweise für Methyl, Ethyl, n-Propyl, iso-Propyl, n-Butyl, iso-Butyl oder tert.-Butyl und R² für C₁-C₄-Alkyl, vorzugsweise für Cyclohexyl, Methyl, Ethyl, n-Propyl, iso-Propyl, n-Butyl, iso-Butyl oder tert.-Butyl steht, 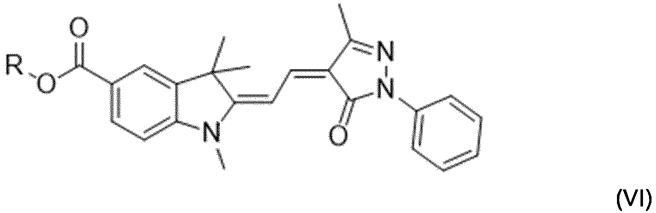
worin R für C₁-C₄-Alkyl, vorzugsweise für Methyl, Ethyl, n-Propyl, iso-Propyl, n-Butyl, iso-Butyl oder tert.-Butyl steht,
   oder 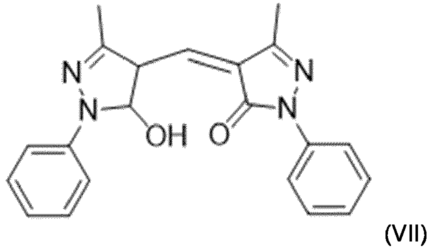
aufweist.

Die Erfindung betrifft schließlich bevorzugt aber auch ein Verfahren zur additiven Fertigung von 3D Druckerzeugnissen mit einem Farbabstand ΔE <20 von den L*a*b* Koordinaten zu einer mit "1" beginnenden Farbnummer der RAL-Farbtabelle, indem Urethanacrylatharz basierte Zusammensetzungen enthaltend wenigstens einen gelben Methinfarbstoff mit einem Molekulargewicht im Bereich von 50 bis 1000 g/mol und einer nach **DIN EN ISO 7579:2010 DE** zu bestimmenden Löslichkeit in der Urethanacrylatharz basierten Zusammensetzung ≥ 0,05 g/L bei 23°C in einem auf Fotopolymerisation basierten SLA-3D-Drucker oder DLP-3D-Drucker eingesetzt werden, wobei der gelbe **Methinfarbstoff** auszuwählen ist aus
4-[(1,5-Dihydro-3-methyl-5-oxo-1-phenyl-4H-pyrazol-4-yliden)methyl]-2,4-dihydro-5-methyl-2-phenyl-3H-pyrazol-3-on; C.I. Solvent Yellow 93, CAS No. 4702-90-3
[[4-[[2-(4-Cyclohexylphenoxy)ethyl]ethylamino]-2-methylphenyl]methylen]-propanedinitril; C.I. Solvent Yellow 179, CAS No. 54049-53-7.

### BEISPIELE

### Methode zur Bestimmung der Lichtechtheit von Farbstoffen in 3D Drucken

Zur Bestimmung der Lichtechtheit von Farbstoffen in 3D Drucken wurden im Rahmen der vorliegenden Erfindung Prüfkörper aus eingefärbtem Harz mit einer Farbstoffkonzentration von 0,02 Gew.-% im Harz hergestellt. Als Prüfkörper wurde ein Quader mit den folgenden Abmessungen mittels 3D Druck aus eingefärbtem Harz hergestellt.
- Länge 60 mm
- Breite 40 mm
- Höhe 2 mm

Die Prüfkörper wurden nach **DIN EN ISO 4892-2** mit Hilfe des Gerätes Xenotest Beta+ (Atlas Material Testing Technology GmbH, Linsengericht-Altenhaßlau, Deutschland) 95 - 100 h lang belichtet (Xenon Lampe).

Die Bewertung der Lichtechtheit erfolgte farbmetrisch. Dazu wurden mit dem Kugelspektralfotometer X-Rite Ci7800 (X-Rite GmbH, Planegg-Martinsried, Deutschland) Transmissionsspektren der belichteten Prüfkörper aufgenommen. Dabei wurden folgende Einstellungen gewählt:

| | | |
|---|---|---|
| • | Messgeometrie | d/8° |
| • | Spektralintervall | 10 nm |
| • | Spektralbereich | 360 - 750 nm |

Aus den Transmissionsspektren wurden mit folgenden Einstellungen die farbmetrischen Daten mit der Herstellersoftware des Kugelspektralfotometers berechnet:

| | | |
|---|---|---|
| • | Lichtquelle/Beobachter | D65 / 10° |
| • | Farbraum | L*a*b*C*h° |

Als Bewertungsgrundlage der Lichtechtheit wurden die Farbabstände, angegeben als ΔE im L*a*b*C*h° Farbraum zwischen belichteten Prüfkörpern und den entsprechenden nicht belichteten Prüfkörper herangezogen. Je größer der Farbabstand war, desto größer war die Änderung des Farbeindruckes in Folge des Einflusses der Belichtung und damit war die Lichtechtheit umso schlechter. Zur Einordnung des ΔE wurde ein Vergleich mit nicht erfindungsgemäßen gelben Farbstoffen (siehe nicht erfindungsgemäße Beispiele), deren Lichtechtheit in anderen Anwendungen (z.B. Kunststoff Massefärbung) laut Herstellerangaben allgemein als gut bewertet wird, herangezogen.

**Tab.2: Bewertung der Lichtechtheit**

| **ΔE nach Belichtung in % *** | **Bewertung** | **Kürzel** |
|---|---|---|
| ≤ 10 | Exzellent | A |
| > 10 - 20 | Sehr gut | B |
| > 20 - 30 | Befriedigend | C |
| > 30 | Mäßig bis unzureichend | D |

| | | |
|---|---|---|
| ** im Vergleich zum mittleren ΔE der nicht erfindungsgemäßen Beispiele* | | |

### Methode zur Bewertung der Stabilität der koloristischen Eigenschaften

Um die Änderung der spektralen Eigenschaften, die die koloristischen Eigenschaften eines Farbstoffes bestimmen, zu ermitteln, wurden die Absorptionsspektren vor und nach der lichtinduzierten Aushärtung der eingefärbten Harze verglichen.

Die wie zuvor beschrieben hergestellten eingefärbten Harze wurden in eine Quarzglasküvette mit einer Breite von 1 cm gefüllt. Daraufhin wurden Absorptionsspektren in Transmission mit dem Gerät x-Rite Ci7800 (X-Rite GmbH, Planegg-Martinsried, Deutschland) im Wellenlängenbereich von 360 - 750 nm aufgenommen. Diese wurden um die Absorption des entsprechenden nicht eingefärbten Harzes korrigiert, indem die selbe Messung mit dem nicht eingefärbten Harz durchgeführt wurde. Analog dazu wurden die Absorptionsspektren in Transmission von den eingefärbten Prüfkörpern aufgenommen und korrigiert. Die Spektren wurden jeweils auf die Schichtdicke der Küvette bzw. des Prüfkörpers normiert.

Dann wurde die Ähnlichkeit der Absorptionsspektren vor und nach dem 3D Druck aus den Messdaten berechnet. Dazu wurde der Korrelationskoeffizient R der normierten Absorption (Spektralintervall 10 nm) berechnet. Je größer R war, desto größer war die Ähnlichkeit der Absorptionsspektren und damit desto stabiler die koloristischen Eigenschaften des Farbstoffes beim 3D Druck.

**Tab.3: Bewertung der Stabilität bzw. Erhaltung der koloristischen Eigenschaften**

| **R** | **Bewertung** | **Kürzel** |
|---|---|---|
| 0,9 - 1 | Hervorragende Erhaltung | A |
| 0,7 - < 0,9 | Gut erhalten | B |
| 0,6 - < 0,7 | Überwiegend erhalten | C |
| 0 - < 0,6 | Auffällige Farbabweichung, unzureichend | D |

Die Herstellung und Prüfung der eingefärbten 3D Drucke erfolgte nach den oben beschriebenen Methoden in drei Harzzusammensetzungen mit unterschiedlichen Eigenschaften (siehe Materialien). In Harzzusammensetzung 1 wurden außerdem exemplarisch Farbstoffgemische untersucht.

**Tab.4: Erfindungsgemäßes Beispiel in Harzzusammensetzung 1**

| **Farbstoff** / **-gemisch** | **ΔE in %** | **Bewertung Belichtung** | **R** | **Bewertung R** |
|---|---|---|---|---|
| Solvent Yellow 93 | 9,1 | A | 0,75 | B |

**Tab.5: Nicht erfindungsgemäße Beispiele verschiedener gelber Farbstoffe in Harzzusammensetzung 1**

| **Farbstoff** | **ΔE in %** | **Bewertung Belichtung** | **R** | **Bewertung R** |
|---|---|---|---|---|
| Solvent Yellow 72 | 41,1 | D | 0,98 | A |
| Solvent Yellow 89 | 37,6 | D | 0,71 | B |
| Solvent Yellow 16 | 48,8 | D | 0,52 | D |

**Tab.6: Erfindungsgemäßes Beispiel in Harzzusammensetzung 2**

| **Farbstoff** | **ΔE in %** | **Bewertung Belichtung** | **R** | **Bewertung R** |
|---|---|---|---|---|
| Solvent Yellow 179 | 2,9 | A | 0,95 | A |

**Tab.7: Nicht erfindungsgemäße Beispiele verschiedener gelber Farbstoffe in Harzzusammensetzung 2**

| **Farbstoff** | **ΔE in %** | **Bewertung Belichtung** | **R** | **Bewertung R** |
|---|---|---|---|---|
| Solvent Yellow 72 | 39,5 | D | 0,92 | A |
| Solvent Yellow 89 | 35,1 | D | 0,63 | C |
| Solvent Yellow 16 | 49,6 | D | 0,45 | D |

**Tab.8: Erfindungsgemäßes Beispiel in Harzzusammensetzung 3**

| **Farbstoff** | **ΔE in %** | **Bewertung Belichtung** | **R** | **Bewertung R** |
|---|---|---|---|---|
| Solvent Yellow 179 | 1,9 | A | 0,90 | A |

**Tab.9: Nicht erfindungsgemäße Beispiele verschiedener gelber Farbstoffe in Harzzusammensetzung 3**

| **Farbstoff** | **ΔE in %** | **Bewertung Belichtung** | **R** | **Bewertung R** |
|---|---|---|---|---|
| Solvent Yellow 72 | 43,0 | D | 0,90 | A |
| Solvent Yellow 89 | 35,8 | D | 0,68 | C |
| Solvent Yellow 16 | 46,2 | D | 0,58 | D |

### Edukte

**Tab.10: Einsatzmaterialien und Bezugsquellen**

| **Material** | **Beschreibung** | **Bezugsquelle** |
|---|---|---|
| 3D Printing UV Sensitive Resin Clear (bezeichnet als **Harzzusammensetzung 1)** | Farbloses Harz für den lichtinduzierten 3D Druck mit hoher Druckgeschwindigkeit (30 - 60 % Polyurethanacrylate CAS 82116-59-4; 10 - 40 % Isooctylacrylat CAS 29590-42-9; 2 - 5 % Photoinitiator) | Shenzhen Anycubic Technology Co., Ltd |
| Addigy^{®} LPU Rigid 341-02 IM (bezeichnet als **Harzzusammensetzung 2)** | Farbloses aliphatisches Polyetherurethanacrylatharz für den lichtinduzierten 3D Druck, optimiert für hohe mechanische Beanspruchung und Festigkeit (< 25 % Isobornylmethacrylat CAS 7534-94-3; ca. 10 % 4-(1-Oxo-2-propenyl)morpholin CAS 5117-12-4; < 0,15 % Methacrylsäure CAS 79-41-4 / 2-Hydroxyethylmethacrylat CAS 868-77-9) | Covestro Deutschland AG |
| Ultracur3D^{®} FL 300 (bezeichnet als **Harzzusammensetzung 3)** | Farbloses reaktives Urethanacrylatharz für den lichtinduzierten 3D Druck, optimiert für hohe Torsionsflexibilität und hohe Reißfestigkeit (1 - 3 % Diphenyl(2,4,6-trimethylbenzoyl)phosphinoxid CAS 75980-60-8; 15 - 20 % Isodecylacrylat CAS 1330-61-6; 5 - 10 % exo-1,7,7-Trimethylbicyclo[2.2.1]hept-2-ylacrylat CAS 5888-33-5; 25 - 50 % 2-Oxazolidinone, 3-ethenyl-5-methyl- CAS 3395-98-0) | BASF 3D Printing Solutions GmbH |
| 4-[(1,5-Dihydro-3-methyl-5-oxo-1-phenyl-4H-pyrazol-4-yliden)methyl]-2,4-dihydro-5-methyl-2-phenyl-3H-pyrazol-3-on | Methinfarbstoff, C.I. Solvent Yellow 93, CAS No. 4702-90-3 | Lanxess Deutschland GmbH |
| [[4-[[2-(4-Cyclohexylphenoxy)ethyl]ethylamino]-2-methylphenyl]methylen]-propanedinitril | Methinfarbstoff, C.I. Solvent Yellow 179, CAS No. 54079-53-7 | Lanxess Deutschland GmbH |
| 3H-Pyrazol-3-one, 2,4-dihydro-4-[2-(2-methoxyphenyl)diazenyl]-5-methyl-2-phenyl- | Azofarbstoff, C.I. Solvent Yellow 72, CAS No. 61813-98-7 | Milliken & Company |
| Cobaltate(1-), bis[2-(3-chlorophenyl)-2,4-dihydro-4-[[2-hydroxy-5-(methylsulfonyl)phenyl]azo]-5-methyl-3H-pyrazol-3-onato(2-)]-, hydrogen, compd. with [1R-(1α,4aβ,10aα)]-1,2,3,4,4a,9,10,10a-octahydro-1,4a-dimethyl-7-(1-methylethyl)-1-phenanthrenemethanamine (1:1) | Azofarbstoff / Kobaltkomplex, C.I. Solvent Yellow 89, CAS No. 20506-24-5 | BASF Colors & Effects GmbH |
| 2,4-dihydro-5-methyl-2-phenyl-4-(phenylazo)-3H-pyrazol-3-one | Azofarbstoff, C.I. Solvent Yellow 16, CAS No. 4314-14-1 | Alfa Chemistry |

## Patentansprüche

1. 3D Druckerzeugnisse mit einem Farbabstand ΔE <20 von den L*a*b* Koordinaten einer mit "1" beginnenden Farbnummer der RAL-Farbtabelle, basierend auf fotopolymerisierbaren Zusammensetzungen enthaltend wenigstens ein Urethanacrylatharz und wenigstens einen gelben Methinfarbstoff mit einem Molekulargewicht im Bereich von 50 bis 1000 g/mol und mit einer nach DIN EN ISO 7579:2010 DE zu bestimmenden Löslichkeit in der Urethanacrylatharz basierten Zusammensetzung ≥ 0,05 g/L bei 23°C.

2. 3D Druckerzeugnisse gemäß Anspruch 1, **dadurch gekennzeichnet, dass** das Urethanacrylatharz auf Urethanacrylat, Polyurethanacrylat oder Polyetherurethanacrylat basiert.

3. 3D Druckerzeugnisse gemäß der Ansprüche 1 oder 2, **dadurch gekennzeichnet, dass** der gelbe Methinfarbstoff ein Merocyaninfarbstoff mit einer Amino- und einer Carbonylgruppe als Endgruppe des Polyenstrukturelements oder ein Styrylfarbstoff mit Styrol-Teilstruktur ist.

4. 3D Druckerzeugnisse gemäß einem oder mehreren der Ansprüche 1 bis 3, **dadurch gekennzeichnet, dass** der gelbe Methinfarbstoff wenigstens eine Struktur der Formeln (V), (VI) oder (VII) 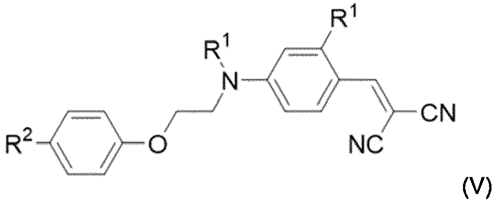
worin R¹ für C₁-C₄-Alkyl, vorzugsweise für Methyl, Ethyl, n-Propyl, iso-Propyl, n-Butyl, iso-Butyl oder tert.-Butyl und R² für C₁-C₄-Alkyl, vorzugsweise für Cyclohexyl, Methyl, Ethyl, n-Propyl, iso-Propyl, n-Butyl, iso-Butyl oder tert.-Butyl steht, 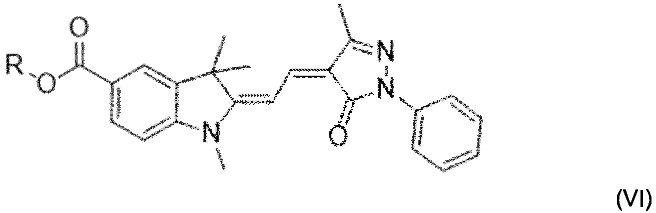
worin R für C₁-C₄-Alkyl, vorzugsweise für Methyl, Ethyl, n-Propyl, iso-Propyl, n-Butyl, iso-Butyl oder tert.-Butyl steht,
oder 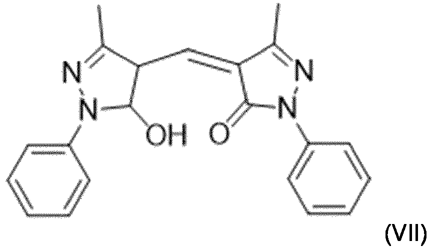
aufweist.

5. 3D Druckerzeugnisse gemäß einem oder mehreren der Ansprüche 1 bis 4, **dadurch gekennzeichnet, dass** der Methinfarbstoff auszuwählen ist aus
4-[(1,5-Dihydro-3-methyl-5-oxo-1-phenyl-4H-pyrazol-4-yliden)methyl]-2,4-dihydro-5-methyl-2-phenyl-3H-pyrazol-3-on,
[[4-[[2-(4-Cyclohexylphenoxy)ethyl]ethylamino]-2-methylphenyl]methylen]-propanedinitril.

6. Verwendung wenigstens eines gelben Methinfarbstoffs zur Steigerung der nach DIN EN ISO 4892-2 zu bestimmenden Lichtechtheit und der koloristischen Eigenschaften fotopolymerisierbarer, Urethanacrylatharz basierter Zusammensetzungen und daraus herzustellender 3D Druckerzeugnisse, **dadurch gekennzeichnet, dass** dieser Methinfarbstoff ein Molekulargewicht im Bereich von 50 bis 1000 g/mol und in der Urethanacrylatharz-basierten Zusammensetzung eine Löslichkeit ≥ 0,05 g/L bei 23°C aufweist mit der Maßgabe, dass die Urethanacrylatharz basierten Zusammensetzungen und die daraus herzustellenden 3D Druckerzeugnisse einen Farbabstand ΔE <20 von den L*a*b* Koordinaten zu einer mit "1" beginnenden Farbnummer der RAL-Farbtabelle aufweisen.

7. Verwendung gemäß Anspruch 6 **dadurch gekennzeichnet, dass** der Einsatz des wenigstens einen gelben Methinfarbstoffs in der additiven Fertigung von 3D Druckerzeugnissen im auf Fotopolymerisation basiertem 3D Druck erfolgt.

8. Verwendung gemäß Anspruch 6 oder 7, **dadurch gekennzeichnet, dass** die Urethanacrylatharz basierten Zusammensetzungen auf Urethanacrylat, auf Polyurethanacrylat oder auf Polyetherurethanacrylat basieren.

9. Verwendung gemäß einem oder mehreren der Ansprüche 6 bis 8, **dadurch gekennzeichnet, dass** der gelbe Methinfarbstoff ein Merocyaninfarbstoff mit einer Amino- und einer Carbonylgruppe als Endgruppe des Polyenstrukturelements oder ein Styrylfarbstoff mit Styrol-Teilstruktur ist.

10. Verwendung gemäß einem oder mehreren der Ansprüche 6 bis 9, **dadurch gekennzeichnet, dass** der gelbe Methinfarbstoff wenigstens eine Struktur der Formeln (V), (VI) oder (VII) 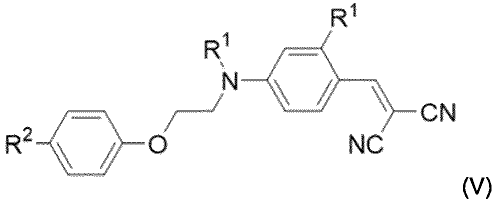
worin R¹ für C₁-C₄-Alkyl, vorzugsweise für Methyl, Ethyl, n-Propyl, iso-Propyl, n-Butyl, iso-Butyl oder tert.-Butyl und R² für C₁-C₄-Alkyl, vorzugsweise für Cyclohexyl, Methyl, Ethyl, n-Propyl, iso-Propyl, n-Butyl, iso-Butyl oder tert.-Butyl steht, 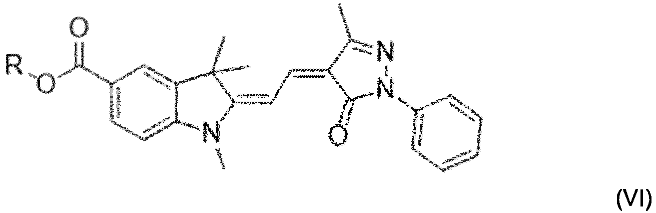
worin R für C₁-C₄-Alkyl, vorzugsweise für Methyl, Ethyl, n-Propyl, iso-Propyl, n-Butyl, iso-Butyl oder tert.-Butyl steht,
oder 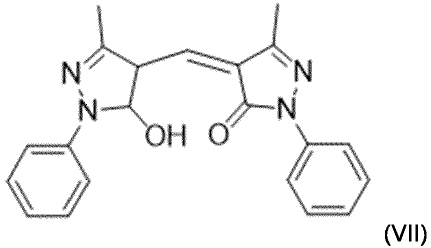
aufweist.

11. Verwendung gemäß einem oder mehreren der Ansprüche 6 bis 9, **dadurch gekennzeichnet, dass** der Methinfarbstoff auszuwählen ist aus
4-[(1,5-Dihydro-3-methyl-5-oxo-1-phenyl-4H-pyrazol-4-yliden)methyl]-2,4-dihydro-5-methyl-2-phenyl-3H-pyrazol-3-on,
[[4-[[2-(4-Cyclohexylphenoxy)ethyl]ethylamino]-2-methylphenyl]methylen]-propanedinitril.

12. Verfahren zur Steigerung der nach DIN EN ISO 4892-2 zu bestimmenden Lichtechtheit und koloristischen Eigenschaften fotopolymerisierbarer, Urethanacrylatharz basierter Zusammensetzungen und daraus herzustellender 3D Druckerzeugnisse, **dadurch gekennzeichnet, dass** wenigstens ein gelber Methinfarbstoff mit einem Molekulargewicht im Bereich von 50 bis 1000 g/mol und einer Löslichkeit in der Urethanacrylatharz basierten Zusammensetzung ≥ 0,05 g/L bei 23°C eingesetzt wird mit der Maßgabe, dass die Urethanacrylatharz basierten Zusammensetzungen einen Farbabstand ΔE <20 von den L*a*b* Koordinaten zu einer mit "1" beginnenden Farbnummer der RAL-Farbtabelle aufweisen.

13. Verfahren gemäß Anspruch 12, **dadurch gekennzeichnet, dass** der Einsatz des wenigstens einen gelben Methinfarbstoffs in der additiven Fertigung von 3D Druckerzeugnissen im auf Fotopolymerisation basiertem 3D Druck vorgesehen ist.

14. Verfahren gemäß Anspruch 12 oder 13, **dadurch gekennzeichnet, dass** die Urethanacrylatharz basierten Zusammensetzungen auf Urethanacrylat, auf Polyurethanacrylat oder auf Polyetherurethanacrylat basieren.

15. Verfahren gemäß einem oder mehreren der Ansprüche 12 bis 14, **dadurch gekennzeichnet, dass** der Methinfarbstoff wenigstens eine Struktur der Formeln (V), (VI) oder (VII) 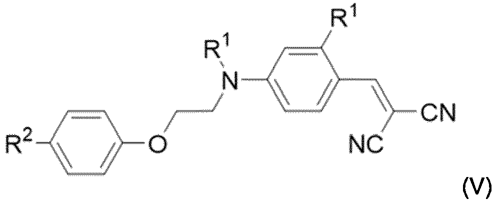
worin R¹ für C₁-C₄-Alkyl, vorzugsweise für Methyl, Ethyl, n-Propyl, iso-Propyl, n-Butyl, iso-Butyl oder tert.-Butyl und R² für C₁-C₄-Alkyl, vorzugsweise für Cyclohexyl, Methyl, Ethyl, n-Propyl, iso-Propyl, n-Butyl, iso-Butyl oder tert.-Butyl steht, 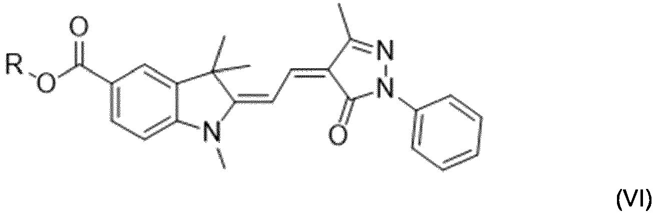
worin R für C₁-C₄-Alkyl, vorzugsweise für Methyl, Ethyl, n-Propyl, iso-Propyl, n-Butyl, iso-Butyl oder tert.-Butyl steht,
oder 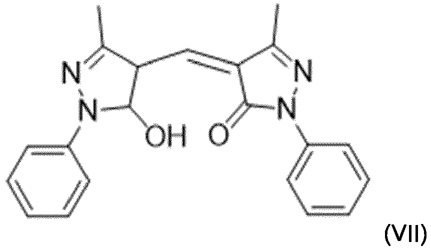
aufweist.

16. Verfahren gemäß einem oder mehreren der Ansprüche 12 bis 14, **dadurch gekennzeichnet, dass** der Methinfarbstoff auszuwählen ist aus
4-[(1,5-Dihydro-3-methyl-5-oxo-1 -phenyl-4H-pyrazol-4-yliden)methyl]-2,4-dihydro-5-methyl-2-phenyl-3H-pyrazol-3-on,
[[4-[[2-(4-Cyclohexylphenoxy)ethyl]ethylamino]-2-methylphenyl]methylen]-propanedinitril.
